# EUROPEAN PATENT SPECIFICATION

(11) **EP 3 290 236 B1**
(45) Date of publication and mention of the grant of the patent: **23.09.2020**
(21) Application number: 17186211.3
(22) Date of filing: 14.08.2017
(51) Int. Cl.: B60C 11/13, B60C 11/03

(54) **TIRE TREAD WITH ASYMMETRIC CIRCUMFERENTIAL GROOVE**
REIFENLAUFFLÄCHE MIT ASYMMETRISCHER UMLAUFENDER RILLE
BANDE DE ROULEMENT DE PNEU AVEC RAINURE CIRCONFÉRENTIELLE ASYMÉTRIQUE

(30) Priority: 29.08.2016 US 201662380571 P
(43) Date of publication of application: 07.03.2018
(73) Proprietor: The Goodyear Tire & Rubber Company, Akron, OH 44316 (US)
(72) Inventor: YOUNG, Austin Gale, Wadsworth, OH 44281 (US); HERMANN, Robert John, Cuyahoga Falls, OH 44221 (US)
(74) Representative: Kutsch, Bernd

(56) References cited:
- EP-A1- 2 423 005
- DE-A1-102014 224 027
- DE-A1-102015 202 371
- US-A1- 2012 199 258

## Description

### Field of Invention

The present invention relates to a tire and, more particularly, to a tire tread and a tire such as a pneumatic tire or non-pneumatic tire including a tread groove with a cross sectional shape specified to reduce generation of cracks in the vicinity of the groove bottom.

### Background of the Invention

In the tread portion of a pneumatic tire, a tensile strain often generates shrinkage of rubber in the groove bottom due to temperature reduction after vulcanization. Such a strain may cause cracking at the groove bottom. Particularly, cracking may occur at arc-like corner portions between the groove bottom and groove walls, since the tensile strain largely acts on the corner portions of the groove. Rubber shrinkage and cracking may also occur at arc-like corner portions located on a shoulder of the tread.

In order to suppress such cracking, a rubber with a high degree of swelling in the tread portion has been used. However, rubber with a high degree of swelling may degrade rolling resistance and steering stability of the pneumatic tire, since rubber hardness may decrease. Grooves with various cross sectional shapes have been tried to mitigate the cracking.

DE-A-10 2015 202 371 describes a pneumatic tire having a tread having a groove extending in a circumferential direction of the tread. The groove has an asymmetric cross-sectional shape with a curved, non-straight groove bottom. A similar tire with a tread with an asymmetric circumferential groove is also described in DE-A-10 2014 224 027.

EP-A-2 423 005 describes a pneumatic tire having a groove bottom with an axially outer wall portion having a smaller radial length than the axially inner wall portion, the axially inner wall portion being on the side of the equatorial plane of the tire. The groove bottom portion may be straight.

### Summary of the Invention

The invention relates to a tire tread in accordance with claim 1 and to a tire in accordance with claim 13.

Dependent claims refer to preferred embodiments of the invention.

A tire tread in accordance with one aspect of the invention has at least one groove extending in a circumferential direction of the tread, the groove having a cross-sectional shape including a first groove sidewall wall portion extending radially inwardly from a first, radially outermost groove edge, a second groove sidewall wall portion extending radially inwardly from a second, radially outermost groove edge, the second, radially outermost groove edge being located axially opposite of the first groove edge on the other side of the groove, the first groove sidewall wall portion having a larger length in the radial direction of the tread than the second groove sidewall wall portion, a first arc portion extending radially continuous with the first groove sidewall wall portion and having the same or a smaller radius of curvature than the first groove sidewall wall portion, a second arc portion extending radially continuous with the second groove sidewall wall portion and having a smaller radius of curvature than the second groove sidewall wall portion, and a groove bottom portion extending from the radially innermost point of the first arc portion to the radially innermost point of the second arc portion. The groove bottom portion in cross-section either extends straight while being inclined in a radially inward direction from the radially innermost point of the first arc portion to the radially innermost point of the second arc portion, wherein the first groove sidewall wall portion is an axially outer groove sidewall wall portion and the second groove sidewall wall portion is an axially inner groove sidewall wall portion with axially inner side meaning the axial side of the groove that is axially closer to the equatorial plane of the tread; or comprises a circumferentially extending groove bottom groove and a first and a second groove bottom section, the first and second groove bottom section having the same radius of curvature, the first groove bottom section connecting the first arc portion and the groove bottom groove and the second groove bottom section connecting the second arc portion and the groove bottom groove, the groove bottom groove having a radially innermost radius of curvature that is smaller than the radius of curvature of the first and second groove bottom section.

In one aspect of the present invention, the tire tread may have at least one groove that is spaced axially apart from the equatorial plane of the tire tread and/or wherein the groove is located at an axial position apart from the equatorial plane of the tire tread by a distance of 10.0 to 35.0 percent of the axial tread width.

In one aspect of the present invention, the first groove sidewall wall portion may be an axially outer groove sidewall wall portion and the second groove sidewall wall portion may be an axially inner groove sidewall wall portion with axially inner side meaning the axial side of the groove that is axially closer to the equatorial plane of the tread.

In one aspect of the present invention, the first groove sidewall wall portion may be an axially outer groove sidewall wall portion and the second groove sidewall wall portion may be an axially inner groove sidewall wall portion with axially inner side meaning the axial side of the groove that is axially closer to the vehicle when the tire tread is applied to a tire and the tire is mounted to a vehicle in accordance with the tire specification.

In a preferred aspect of the present invention, the groove is a main circumferential groove.

In a preferred aspect of the present invention, the groove has a maximum axial width in a range of from 5.0 mm to 20.0 mm, preferably 10 to 20 mm or 12 to 16 mm; and/or an axial width between the first and the second groove edge in a range of from 5.0 mm to 20.0 mm, preferably 10 to 20 mm or 12 to 16 mm.

In a preferred aspect of the present invention, the groove bottom groove has a radius of curvature in a range of from 0.5 to 5 mm, preferably 0.5 to 3 mm or 1 to 3 mm, and a radius of curvature of the first and the second groove bottom section in a range of from 2 to 12 mm, preferably 2 to 8 mm or 3 to 5 mm.

In a preferred aspect of the present invention, the second groove sidewall wall portion has a draft angle with respect to the radial direction in a range of from 0.0° and 5.0°, preferably 1.0° and 3.0°.

In a preferred aspect of the present invention, the first groove sidewall wall portion has a draft angle with respect to the radial direction in a range of from 10.0° and 20.0°, preferably 13.0° and 17.0°.

In a preferred aspect of the present invention, the second groove sidewall wall portion has a second draft angle with respect to the radial direction and the first groove sidewall wall portion has a first draft angle with respect to the radial direction, and wherein the second and first draft angle are different. Preferably, the first draft angle is larger than the second draft angle such as at least 5° or at least 10° larger.

In a preferred aspect of the present invention, the groove has a radius of curvature of the first and/or second arc portion that are gradually decreasing away from a radially outer tread surface.

In a preferred aspect of the present invention, the groove extends at an angle of less than 45°, preferably less than 5° or at 0°, with respect to the circumferential direction of the tread.

A tire in accordance with one aspect of the present invention includes a tread portion having at least one circumferential main groove extending in a circumferential direction of the tire and spaced axially apart from an equator of the tire. The groove has a circumferential profile shape including an inner wall portion extending radially inward from an axially inner edge of the groove, an inner arc portion continuous with the inner wall portion and having a smaller radius of curvature than the inner wall portion, an outer wall portion extending radially inward from an axially outer edge of the groove and having a larger length than the inner wall portion, an outer arc portion continuous with the outer wall portion and having a smaller radius of curvature than the outer wall portion, and a groove bottom portion extending straight from the outer arc portion toward the inner arc portion while being inclined in a radially inward direction whereby the groove bottom portion has a constant radius of curvature.

According to another aspect of the tire, the groove may have an axial tread surface width between 10.0 mm and 20.0 mm.

According to still another aspect of the tire, the groove may have an axial tread surface width of 14.84 mm.

According to yet another aspect of the tire, the groove may have an upper base radius between 3.0 mm and 8.0 mm.

According to still another aspect of the tire, the groove may have an upper base radius of 5.0 mm.

According to yet another aspect of the tire, the groove may have a bottom base radius between 1.0 mm and 5.0 mm.

According to still another aspect of the tire, the groove may have a bottom base radius of 3.0 mm.

According to yet another aspect of the tire, the groove may have two asymmetric draft angles of between 0.0° and 5.0° and 10.0° and 20.0°, respectively.

According to still another aspect of the tire, the groove may have a draft angle radially inward of asymmetric draft angles between 10.0° and 20.0°.

According to another aspect of the tire, the groove may be located at an axial position apart from the tire equator by a distance of 10.0 to 35.0 percent of an axial tread width.

According to yet another aspect of the tire, the groove may have a radius of curvature of the outer arc portion gradually decreasing away from a radially outer tread surface of the tire.

According to still another aspect of the tire, the groove may extend at an angle of less than 45° with respect to the circumferential direction of the tire.

### Brief Description of the Drawings

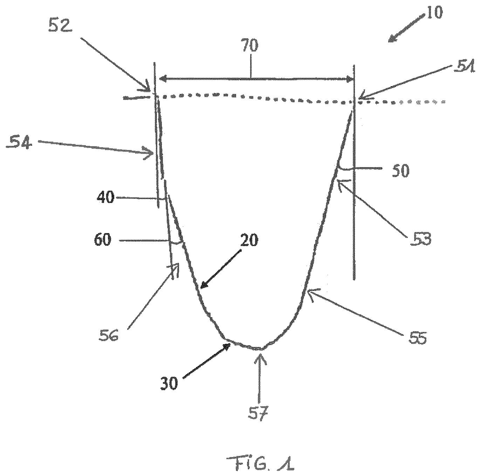

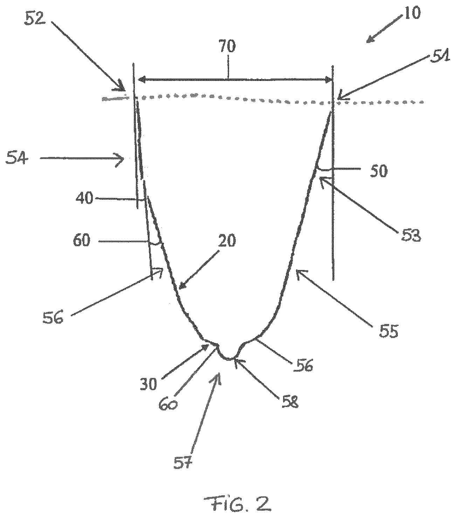

The structure, operation, and advantages of the present invention will become more apparent upon contemplation of the following description of examples of the present invention taken in conjunction with the accompanying drawings of the examples, wherein FIG. 1 is a cross sectional view showing a tread groove in accordance with a comparative example and FIG. 2 is a cross sectional view showing a tread groove in accordance with an embodiment of the present invention.

### Detailed Description of Example Embodiments of the Present Invention

A pneumatic tire usually includes a carcass extending from a tread portion to each of two bead cores in opposing bead portions through sidewall portions, and a belt layer disposed radially outward of the carcass in the tread portion, as disclosed in US 2012/0042998 for instance.

The carcass may include at least one carcass ply having a toroidal main portion that extending from one bead core to the opposing bead core and turn up portions extending from both ends of the main portion and turned up around the bead cores from the axially inside to the axially outside of the pneumatic tire to anchor the carcass ply to the bead cores. In the carcass ply, carcass cords (e.g., carcass cords made of an organic fiber) may be disposed at an angle of, for example, 75° to 90° with respect to the tire circumferential direction. Between the ply main portion and each turn up portion may be disposed a bead apex rubber for reinforcement of bead portions extending radially outwardly from the bead cores in a tapered manner.

The belt layer may include at least two plies. The belt plies may include belt cords having a high elasticity (e.g., steel cords). The pneumatic tire may include two belt plies (e.g., a radially inner belt ply and a radially outer belt ply in which the inner ply has a larger width than the outer ply) and steel belt cords arranged at an angle of, for instance, 15° to 40° with respect to the tire circumferential direction. The belt plies may be stacked so that the belt cords in one ply cross cords in the other belt ply.

The tread portion often has at least one circumferential main groove extending continuously in the tire circumferential direction. The tread portion may have three, four or five circumferential main grooves for instance extending straight and continuously in the tire circumferential direction on both sides of a tire equator (e.g., a pair of first circumferential main grooves disposed on a tread edge and a pair of second circumferential main grooves disposed axially inward of the first circumferential main grooves whereby on the tread portion are formed a pair of shoulder land portions extending between the first circumferential main groove and a tread edge, a pair of middle land portions extending between the first circumferential main groove and the second circumferential main groove, and a center land portion extending between the second circumferential main grooves). The first and second circumferential main grooves may be disposed symmetrically with respect to the tire equator.

The term "tread edge" as used herein means each of axially outer edges of a ground contact surface of the pneumatic tire contacting a ground (flat surface) when the pneumatic tire, in a standard state, is loaded with a normal load. The term "normal load" means a load defined for every tire in a standardizing system and is, for example, a "maximum load capacity" in JATMA, a maximum value recited in the table of "Tire Load Limits at Various Cold Inflation Pressures" in TRA, and/or "Load Capacity" in ETRTO, provided that in case of tires for passenger cars, the "normal load" is a load of 88% of the load defined above.

The circumferential main (first) groove is preferably be formed into a straight groove extending straight in the tire circumferential direction. The straight groove defines shoulder land portions having for instance a constant width. Therefore, since the tensile strain acting on the first main groove may be equalized, cracking may be suppressed. However, the first main groove may not be limited to a straight groove, but may have other configurations (e.g., a zigzag groove in which each zigzag component is inclined at an angle of 45° or 30° with respect to the tire circumferential direction).

The first circumferential main groove may have a profile shape such that, in a meridian cross section including a rotational axis of the tire in a standard state, the profile shape may define an inner wall portion extending radially inward from an axially inner edge on one side of the tire equator and defining a flat wall, or a curved wall having a first radius of curvature, an inner arc portion continuous with the inner wall portion and having a smaller radius of curvature than a second radius of curvature of the inner wall portion, an outer wall portion extending radially inward from an axially outer edge on a tread edge side and having a larger length than that of the inner wall portion and defining a flat wall or a curved wall having a third radius of curvature, an outer arc portion continuous with the outer wall portion and having a smaller fourth radius of curvature than the third radius of curvature of the outer wall portion, and a groove bottom portion extending straight from the outer arc portion toward the inner arc portion while being inclined in a radially inward direction whereby the main groove has a maximum depth portion on a tire equator side with respect to a center position of its width.

A pneumatic tire with such a circumferential main groove may increase rubber volume to enhance the rigidity near the outer arc portion. The pneumatic tire may thereby counter tensile strain resulting from rubber shrinkage occurring after vulcanization and thus reduce cracks in the vicinity of the outer arc portion and the groove bottom. The pneumatic tire may suppress increases in rolling resistance and deterioration of steering stability.

A "double bottom" groove geometry in accordance with the present invention may allow a larger base radius and/or larger draft angle without increasing the groove width at the tread surface. Limiting the groove width may allow maintenance of wearable rubber volume (removal kilometers) and reduce rib tear from catching an obstruction with the inside surface of an outside rib. Both larger base radius and increase draft angles result in lower stress at the bottom of the groove.

The double bottom groove geometry may allow the use of larger base radius and and/or larger rib edge draft angle by eliminating the requirement that each side of the groove radii be tangent at the bottom of the groove. The upper and lower groove base radii may have a wide range of useable radii. Either may be varied independently to meet specific application requirements and may also be impacted by design nonskid, rib draft angle, and appearance, while still meeting the same objectives of increasing the base radii and/or draft angle without increasing the groove surface width. A lower limit for upper groove radii may be a radius that is tangent at the groove base (full nonskid) with no sub groove being required. An upper limit may be restrained only by groove geometry and appearance. Lower groove radii may be restrained by groove geometry and appearance. The radii and draft angles of FIG. 1 and FIG. 2 set no constraints on possible combination options of radii and draft angles within the scope of the present invention.

One conventional double bottom groove has used a large base radius and a narrower, deeper subsection of groove bottom with a small base radius. This approach may increase under tread groove gauge (narrow subsurface groove prevents stones from reaching true groove bottom) and may allow larger base radii and larger draft angles in the upper groove profile (reducing the probability of stone holding and reducing probability of base of groove stress cracking). However, the small base radius at the groove bottom of the narrow subsurface groove affected nonskid measurement and visual appearance when approaching wear out.

A double bottom groove geometry in accordance with the present invention may minimize those disadvantages. Both the upper base radii and the bottom base radii may be large radii.

As shown in FIG.1, a groove 10 of a pneumatic or non-pneumatic tire has a tread surface width 70 of between 10.0 mm and 20.0 mm, or about 15.0 mm or 14.84 mm. The groove 10 comprises a first groove edge 51, a second groove edge 52 on the opposite groove side, a first sidewall portion 53, a second sidewall portion 54 on the opposite groove side, a first arc portion 55, a second arc portion 56 on the opposite groove side and a groove bottom portion 56. The groove 10 further has a first draft angle 50 and a second draft angle 40. The second arc portion 56 may be a straight portion with a draft angle 60 in a range of from 10.0° to 20.0°.

As shown in FIG.2, a double bottom groove 10 of a pneumatic or non-pneumatic tire is shown. This groove 10 has a tread surface width 70 of between 10.0 mm and 20.0 mm, or about 15.0 mm or 14.84 mm. The groove 10 comprises a first groove edge 51, a second groove edge 52 on the opposite groove side, a first sidewall portion 53, a second sidewall portion 54 on the opposite groove side, a first arc portion 55, a second arc portion 56 on the opposite groove side and a groove bottom portion 56. The groove 10 further has a first draft angle 50 and a second draft angle 40. The second arc portion 56 may be a straight portion with a draft angle 60 in a range of from 10.0° to 20.0°. The groove bottom portion 56 comprises a first and a second groove bottom section 59, 60. The first and second groove bottom sections 59, 60 preferably have the same radius of curvature. The first groove bottom section 59 connects the first arc portion 55 and a groove bottom groove 58. The second groove bottom section 60 connects the second arc portion 56 and the groove bottom groove 58. The groove bottom groove 58 has a radially innermost radius of curvature that is smaller than the radius of curvature of the first and second groove bottom sections 59, 60. The groove bottom groove 58 preferably extends circumferentially in parallel with the (main) groove 10. Preferably, it has a depth in a range of from 0.5 to 2 mm such as 1 mm. The tread has a tread surface width 70 of between 10.0 mm and 20.0 mm, or about 15.0 mm or 14.84 mm.

The tread may have an upper base radius 20 of between 3.0 mm and 8.0 mm, or about 5.0 mm, and a bottom base radius 30 of between 1.0 mm and 5.0 mm, or about 3.0 mm, along with asymmetric draft angles 40, 50 of between 0.0° and 5.0°, or 2.0°, and between 10.0° and 20.0°, or 15.0°, respectively, with a large draft angle 60 of between 10.0° and 20.0°, or about 15.0°, at a base of both sides of the groove 10.

The depth of the groove 10 (as measured in the radial direction and including the depth of the groove bottom groove, if present) is preferably in a range of from 6 to 9 mm of in a range of from 17 to 20 mm.

## Claims

1. A tire tread having at least one groove (10) extending in a circumferential direction of the tread, the groove (10) having a cross-sectional shape including a first groove sidewall wall portion (53) extending radially inwardly from a first, radially outermost groove edge (51), a second groove sidewall wall portion (54) extending radially inwardly from a second, radially outermost groove edge (52), the second, radially outermost groove edge (52) being located axially opposite of the first groove edge (51) on the other side of the groove (10), the first groove sidewall wall portion (53) having a larger length in the radial direction of the tread than the second groove sidewall wall portion (54), a first arc portion (55) extending radially continuous with the first groove sidewall wall portion (53) and having the same or a smaller radius of curvature than the first groove sidewall wall portion (53), a second arc portion (56) extending radially continuous with the second groove sidewall wall portion (54) and having a smaller radius of curvature than the second groove sidewall wall portion (54), and a groove bottom portion (57) extending from the radially innermost point of the first arc portion (55) to the radially innermost point of the second arc portion (56), the groove bottom portion (57) in cross-section either
(i) extends straight from the first arc portion (55) toward the second arc portion (56) while being inclined in a radially inward direction thus extending from the radially innermost point of the first arc portion (55) to the radially innermost point of the second arc portion (56), wherein the first groove sidewall wall portion (53) is an axially outer groove sidewall wall portion and the second groove sidewall wall portion (54) is an axially inner groove sidewall wall portion with axially inner side meaning the axial side of the groove (10) that is axially closer to the equatorial plane of the tread; or
(ii) comprising a circumferentially extending groove bottom groove (58) and a first and a second groove bottom section (59, 60), the first and second groove bottom section (59, 60) preferably having the same radius of curvature, the first groove bottom section (59) connecting the first arc portion (55) and the groove bottom groove (58) and the second groove bottom section (60) connecting the second arc portion (56) and the groove bottom groove (58), the groove bottom groove (58) having a radially innermost radius of curvature that is smaller than the radius of curvature of the first and second groove bottom section (59, 60).

2. The tire tread of claim 1 wherein the at least one groove (10) is spaced axially apart from the equatorial plane of the tire tread.

3. The tire tread of claim 1 wherein the groove (10) is located at an axial position apart from the equatorial plane of the tire tread by a distance of 10.0 to 35.0 percent of the axial tread width.

4. The tire tread of at least one of the previous claims wherein the groove (10) is a main circumferential groove.

5. The tire tread of at least one of the previous claims wherein the groove (10) has a maximum axial width in a range of from 5.0 mm to 20.0 mm, preferably 10 to 20 mm or 12 to 16 mm.

6. The tire tread of at least one of the previous claims wherein the groove (10) has an axial width between the first and the second groove edge (51, 52) in a range of from 5.0 mm to 20.0 mm, preferably 10 to 20 mm or 12 to 16 mm.

7. The tire tread of at least one of the previous claims 1 to 6 wherein the groove bottom groove (58) has a radius of curvature in a range of from 0.5 to 5 mm, preferably 0.5 to 3 mm or 1 to 3 mm, and a radius of curvature of the first and the second groove bottom section (59, 60) in a range of from 2 to 12 mm, preferably 2 to 8 mm or 3 to 5 mm.

8. The tire tread of at least one of the previous claims wherein the second groove sidewall wall portion (54) has a draft angle (40) with respect to the radial direction in a range of from 0.0° and 5.0°, preferably 1.0° and 3.0°.

9. The tire tread of at least one of the previous claims wherein the first groove sidewall wall portion (53) has a draft angle (50) with respect to the radial direction in a range of from 10.0° and 20.0°, preferably 13.0° and 17.0°.

10. The tire tread of at least one of the previous claims wherein the second groove sidewall wall portion (54) has a second draft angle (40) with respect to the radial direction and wherein the first groove sidewall wall portion (53) has a first draft angle (50) with respect to the radial direction, and wherein the second and first draft angle (40, 50) are different.

11. The tire tread of at least one of the previous claims wherein the groove (10) has a radius of curvature of the first and/or second arc portion (55, 56) that are gradually decreasing away from a radially outer tread surface.

12. The tire tread of at least one of the previous claims wherein the groove (10) extends at an angle of less than 45°, preferably less than 5° or at 0°, with respect to the circumferential direction of the tread.

13. A tire, preferably a pneumatic tire, having a tire tread in accordance with at least one of the previous claims.

## Patentansprüche

1. Reifenlauffläche, die wenigstens eine Rille (10) aufweist, die sich in einer Umfangsrichtung der Lauffläche erstreckt, wobei die Rille (10) eine Querschnittsform aufweist, die Folgendes beinhaltet: einen ersten Rillenseitenwand-Wandabschnitt (53), der sich radial nach innen aus einer ersten radial äußersten Rillenkante (51) erstreckt, einen zweiten Rillenseitenwand-Wandabschnitt (54), der sich radial nach innen aus einer zweiten radial äußersten Rillenkante (52) erstreckt, wobei sich die zweite radial äußerste Rillenkante (52) axial gegenüber der ersten Rillenkante (51) auf der anderen Seite der Rille (10) befindet, wobei der erste Rillenseitenwand-Wandabschnitt (53) in der radialen Richtung der Lauffläche eine größere Länge aufweist als der zweite Rillenseitenwand-Wandabschnitt (54), einen ersten Bogenabschnitt (55), der sich radial durchgehend mit dem ersten Rillenseitenwand-Wandabschnitt (53) erstreckt und den gleichen oder einen kleineren Krümmungsradius als der erste Rillenseitenwand-Wandabschnitt (53) aufweist, einen zweiten Bogenabschnitt (56), der sich radial durchgehend mit dem zweiten Rillenseitenwand-Wandabschnitt (54) erstreckt und einen kleineren Krümmungsradius als der zweite Rillenseitenwand-Wandabschnitt (54) aufweist, und einen Rillenbodenabschnitt (57), der sich aus dem radial innersten Punkt des ersten Bogenabschnitts (55) zu dem radial innersten Punkt des zweiten Bogenabschnitts (56) erstreckt, wobei der Rillenbodenabschnitt (57) in einem Querschnitt entweder
(i) sich gerade aus dem ersten Bogenabschnitt (55) in Richtung des zweiten Bogenabschnitts (56) erstreckt, während er in einer radial nach innen gerichteten Richtung geneigt ist, wodurch er sich aus dem radial innersten Punkt des ersten Bogenabschnitts (55) zu dem radial innersten Punkt des zweiten Bogenabschnitts (56) erstreckt, wobei der erste Rillenseitenwand-Wandabschnitt (53) ein axial äußerer Rillenseitenwand-Wandabschnitt ist und der zweite Rillenseitenwand-Wandabschnitt (54) ein axial innerer Rillenseitenwand-Wandabschnitt ist, wobei axial innere Seite die axiale Seite der Rille (10) meint, die axial näher an der Äquatorialebene der Lauffläche ist; oder
(ii) eine sich in Umfangsrichtung erstreckende Rillenbodenrille (58) und einen ersten und einen zweiten Rillenbodenbereich (59, 60) umfasst, wobei der erste und der zweite Rillenbodenbereich (59, 60) vorzugsweise den gleichen Krümmungsradius aufweisen, wobei der erste Rillenbodenabschnitt (59) den ersten Bogenabschnitt (55) und die Rillenbodenrille (58) verbindet und der zweite Rillenbodenabschnitt (60) den zweiten Bogenabschnitt (56) und die Rillenbodenrille (58) verbindet, wobei die Rillenbodenrille (58) einen radial innersten Krümmungsradius aufweist, der kleiner als der Krümmungsradius des ersten und des zweiten Rillenbodenbereichs (59, 60) ist.

2. Reifenlauffläche nach Anspruch 1, wobei die wenigstens eine Rille (10) axial von der Äquatorialebene der Reifenlauffläche weg beabstandet ist.

3. Reifenlauffläche nach Anspruch 1, wobei sich die Rille (10) an einer axialen Position weg von der Äquatorialebene der Reifenlauffläche mit einer Entfernung von 10,0 bis 35,0 Prozent der axialen Laufflächenbreite befindet.

4. Reifenlauffläche nach wenigstens einem der vorhergehenden Ansprüche, wobei die Rille (10) eine Hauptumfangsrille ist.

5. Reifenlauffläche nach wenigstens einem der vorhergehenden Ansprüche, wobei die Rille (10) eine maximale axiale Breite in einem Bereich von 5,0 mm bis 20,0 mm, vorzugsweise 10 bis 20 mm oder 12 bis 16 mm, aufweist.

6. Reifenlauffläche nach wenigstens einem der vorhergehenden Ansprüche, wobei die Rille (10) eine axiale Breite zwischen der ersten und der zweiten Rillenkante (51, 52) in einem Bereich von 5,0 mm bis 20,0 mm, vorzugsweise 10 bis 20 mm oder 12 bis 16 mm, aufweist.

7. Reifenlauffläche nach wenigstens einem der vorhergehenden Ansprüche 1 bis 6, wobei die Rillenbodenrille (58) einen Krümmungsradius in einem Bereich von 0,5 bis 5 mm, vorzugsweise 0,5 bis 3 mm oder 1 bis 3 mm, und einen Krümmungsradius des ersten und des zweiten Rillenbodenabschnitts (59, 60) in einem Bereich von 2 bis 12 mm, vorzugsweise 2 bis 8 mm oder 3 bis 5 mm, aufweist.

8. Reifenlauffläche nach wenigstens einem der vorhergehenden Ansprüche, wobei der zweite Rillenseitenwand-Wandabschnitt (54) einen Schrägenwinkel (40) in Bezug auf die radiale Richtung in einem Bereich von 0,0° und 5,0°, vorzugsweise 1,0° und 3,0°, aufweist.

9. Reifenlauffläche nach wenigstens einem der vorhergehenden Ansprüche, wobei der erste Rillenwand-Wandabschnitt (53) einen Schrägenwinkel (50) in Bezug auf die radiale Richtung in einem Bereich von 10,0° und 20,0°, vorzugsweise 13,0° und 17,0°, aufweist.

10. Reifenlauffläche nach wenigstens einem der vorhergehenden Ansprüche, wobei der zweite Rillenseitenwand-Wandabschnitt (54) einen zweiten Schrägenwinkel (40) in Bezug auf die radiale Richtung aufweist und wobei der erste Rillenseitenwand-Wandabschnitt (53) einen ersten Schrägenwinkel (50) in Bezug auf die radiale Richtung aufweist, und wobei der zweite und der erste Schrägenwinkel (40, 50) unterschiedlich sind.

11. Reifenlauffläche nach wenigstens einem der vorhergehenden Ansprüche, wobei die Rille (10) einen Krümmungsradius des ersten und/oder des zweiten Bogenabschnitts (55, 56) aufweist, der schrittweise weg von einer radial äußeren Laufflächenoberfläche abnimmt.

12. Reifenlauffläche nach wenigstens einem der vorhergehenden Ansprüche, wobei sich die Rille (10) in einem Winkel von weniger als 45°, vorzugsweise weniger als 5° oder bei 0°, in Bezug auf die Umfangsrichtung der Lauffläche, erstreckt.

13. Reifen, vorzugsweise ein Luftreifen, der eine Reifenlauffläche nach wenigstens einem der vorhergehenden Ansprüche aufweist.

## Revendications

1. Bande de roulement de pneumatique qui possède au moins une rainure (10) qui s'étend dans une direction circonférentielle de la bande de roulement, la rainure (10) possédant une configuration en section transversale qui englobe une première portion (53) faisant office de paroi, sous la forme d'une paroi latérale de la rainure, qui s'étend vers l'intérieur dans la direction radiale à partir d'un premier bord (51) de la rainure le plus externe dans la direction radiale, une deuxième portion (54) faisant office de paroi, sous la forme d'une paroi latérale de la rainure, qui s'étend vers l'intérieur dans la direction radiale à partir d'un deuxième bord (52) de la rainure le plus externe dans la direction radiale, le deuxième bord (52) de la rainure le plus externe dans la direction radiale étant disposé, dans la direction axiale, à l'opposé du premier bord (51) de la rainure de l'autre côté de la rainure (10), la première portion (53) faisant office de paroi, sous la forme d'une paroi latérale de la rainure possédant une longueur dans la direction radiale de la bande de roulement, qui est supérieure à celle de la deuxième portion (54) faisant office de paroi, sous la forme d'une paroi latérale de la rainure, une première portion de forme en forme d'arc (55) qui s'étend dans la direction radiale en continu avec la première portion (53) faisant office de paroi, sous la forme d'une paroi latérale de la rainure et qui possède le même rayon de courbure que celui de la première portion (53) faisant office de paroi, sous la forme d'une paroi latérale de la rainure, ou un rayon de courbure qui est inférieur à celui de ladite première portion, une deuxième portion en forme d'arc (56) qui s'étend dans la direction radiale en continu avec la deuxième portion (54) faisant office de paroi, sous la forme d'une paroi latérale de la rainure et qui possède un rayon de courbure qui est inférieur à celui de la deuxième portion (54) faisant office de paroi, sous la forme d'une paroi latérale de la rainure, et une portion (57) faisant office de base de la rainure qui s'étend à partir du point le plus interne dans la direction radiale de la première portion en forme d'arc (55) jusqu'au point le plus interne dans la direction radiale de la deuxième portion en forme d'arc (56), la portion (57) faisant office de base de la rainure, en section transversale,
(i) soit s'étendant dans la direction rectiligne à partir de la première portion (55) en forme d'arc dans la direction de la deuxième portion (56) en forme d'arc, tout en étant inclinée vers l'intérieur dans la direction radiale pour ainsi s'étendre à partir du point le plus interne dans la direction radiale de la première portion (55) en forme d'arc jusqu'au point le plus interne dans la direction radiale de la première portion (56) en forme d'arc ; dans laquelle la première portion (53) faisant office de paroi, sous la forme d'une paroi latérale de la rainure représente une portion faisant office de paroi, sous la forme d'une paroi latérale de la rainure, externe dans la direction axiale, et la deuxième portion (54) faisant office de paroi, sous la forme d'une paroi latérale de la rainure représente une portion faisant office de paroi, sous la forme d'une paroi latérale de la rainure, interne dans la direction axiale, le côté interne dans la direction axiale désignant le côté axial de la rainure (10) qui est plus proche, dans la direction axiale, du plan équatorial de la bande de roulement ;
(ii) soit comprenant une rainure (58) à la base de la rainure, qui s'étend dans la direction circonférentielle, et un premier et un deuxième tronçon (59, 60) de la base de la rainure, les premier et deuxième tronçons (59, 60) de la base de la rainure possédant de préférence le même rayon de courbure, le premier tronçon (59) de la base de la rainure reliant la première portion (55) en forme d'arc et la rainure (58) de la base de la rainure et le deuxième tronçon (60) de la base de la rainure reliant la deuxième portion (56) en forme d'arc et la rainure (58) de la base de la rainure, la rainure (58) de la base de la rainure possédant un rayon de courbure le plus interne dans la direction radiale qui est inférieur au rayon de courbure des premier et deuxième tronçons (59, 60) de la base de la rainure.

2. Bande de roulement de pneumatique selon la revendication 1, dans laquelle ladite au moins une rainure (10) est disposée dans la direction axiale en dehors du plan équatorial de la bande de roulement du bandage.

3. Bande de roulement de pneumatique selon la revendication 1, dans laquelle la rainure (10) est disposée à un endroit axial en dehors du plan équatorial de la bande de roulement de pneumatique sur une distance qui représente de 10,0 à 35,0 % de la largeur axiale de la bande de roulement.

4. Bande de roulement de pneumatique selon au moins une des revendications précédentes, dans laquelle la rainure (10) représente une rainure circonférentielle principale.

5. Bande de roulement de pneumatique selon au moins une des revendications précédentes, dans laquelle la rainure (10) possède une largeur axiale maximale qui se situe dans une plage de 5,0 mm à 20,0 mm, de préférence de 10 à 20 mm ou de 12 à 16 mm.

6. Bande de roulement de pneumatique selon au moins une des revendications précédentes, dans laquelle la rainure (10) possède une largeur axiale entre le premier et le deuxième bord (51, 52) de la rainure, qui se situe dans une plage de 5,0 mm à 20,0 mm, de préférence de 10 à 20 mm ou de 12 à 16 mm.

7. Bande de roulement de pneumatique selon au moins une des revendications 1 à 6, dans laquelle la rainure (58) de la base de la rainure possède un rayon de courbure qui se situe dans une plage de 0,5 à 5 mm, de préférence de 0,5 à 3 mm ou de 1 à 3 mm ; et un rayon de courbure du premier et du deuxième tronçon (59, 60) de la base de la rainure qui se situe dans une plage de 2 à 12 mm, de préférence de 2 à 8 mm ou de 3 à 5 mm.

8. Bande de roulement de pneumatique selon au moins une des revendications précédentes, dans laquelle la deuxième portion (54) faisant office de paroi, sous la forme d'une paroi latérale de la rainure forme un angle de dépouille (40) par rapport à la direction radiale qui se situe dans une plage de 0,0° à 5°, de préférence de 1,0° à 3,0°.

9. Bande de roulement de pneumatique selon au moins une des revendications précédentes, dans laquelle la première portion (53) faisant office de paroi, sous la forme d'une paroi latérale de la rainure forme un angle de dépouille (50) par rapport à la direction radiale qui se situe dans une plage de 10,0° à 20,0°, de préférence de 13,0° à 17,0°.

10. Bande de roulement de pneumatique selon au moins une des revendications précédentes, dans laquelle la deuxième portion (54) faisant office de paroi, sous la forme d'une paroi latérale de la rainure forme un angle de dépouille (40) par rapport à la direction radiale et la première portion (53) faisant office de paroi, sous la forme d'une paroi latérale de la rainure forme un angle de dépouille (50) par rapport à la direction radiale, et dans laquelle le premier et le deuxième angle de dépouille (40, 50) sont différents.

11. Bande de roulement de pneumatique selon au moins une des revendications précédentes, dans laquelle la rainure (10) possède un rayon de courbure de la première et/ou de la deuxième portion en forme d'arc (55, 56) qui diminue progressivement lorsqu'on s'écarte d'une surface de la bande de roulement, externe dans la direction radiale.

12. Bande de roulement de pneumatique selon au moins une des revendications précédentes, dans laquelle la rainure (10) s'étend en formant un angle qui est inférieur à 45°, de préférence qui est inférieur à 5° ou qui est égal à 0°, par rapport à la direction circonférentielle de la bande de roulement.

13. Pneumatique, de préférence bandage pneumatique, possédant une bande de roulement de pneumatique selon au moins une des revendications précédentes.
